(19) Europäisches Patentamt
European Patent Office
Office européen des brevets

(11) Veröffentlichungsnummer: **0 016 383**
**B1**

# (12) EUROPÄISCHE PATENTSCHRIFT

(45) Veröffentlichungstag der Patentschrift: **26.05.82**

(51) Int. Cl.³: **C 07 F 9/65,** A 01 N 57/16

(21) Anmeldenummer: **80101165.1**

(22) Anmeldetag: **07.03.80**

## (54) Oxadiazolylmethylthiolphosphate, Verfahren zu ihrer Herstellung und ihre Verwendung zur Bekämpfung von Schädlingen.

(30) Priorität: **08.03.79 DE 2909013**

(43) Veröffentlichungstag der Anmeldung: **01.10.80 Patentblatt 80/20**

(45) Bekanntmachung des Hinweises auf die Patenterteilung: **26.05.82 Patentblatt 82/21**

(84) Benannte Vertragsstaaten: **AT BE CH DE FR GB IT LU NL SE**

(56) Entgegenhaltungen:
**DE-A-1 942 993**
**DE-A-1 963 672**
**FR-A-2 108 538**

(73) Patentinhaber: **BASF Aktiengesellschaft, Carl-Bosch-Strasse 38, D-6700 Ludwigshafen (DE)**

(72) Erfinder: **Theobald, Hans, Dr., Parkstrasse 2, D-6703 Limburgerhof (DE)**
Erfinder: **Adolphi, Heinrich, Dr., Kalmitweg 11, D-6703 Limburgerhof (DE)**
Erfinder: **Kiehs, Karl, Dr., Sudetenstrasse 22, D-6840 Lampertheim (DE)**

EP 0 016 383 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Oxadiazolylmethylthiolphosphate, Verfahren zu ihrer Herstellung und ihre Verwendung zur Bekämpfung von Schädlingen

Die vorliegende Erfindung betrifft neue 1,3,4-Oxadiazolylmethylthiolphosphate, ein Verfahren zu ihrer Herstellung sowie Schädlingsbekämpfungsmittel, die diese 1,3,4-Oxadiazolylmethylthiolphosphate als Wirkstoffe enthalten.

O,O-Dialkyl-1,3,4-oxadiazolylmethylthiolphosphate, die insektizid und akarizid wirksam sind, sind aus der DE-OS 1 942 993 bekannt.

Es wurde gefunden, dass 1,3,4-Oxadiazolylmethylthiolphosphate der Formel I

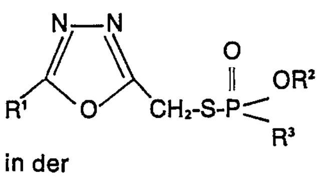

I

in der

$R^1$ und $R^2$ gleich oder verschieden sind und einen Alkylrest mit bis zu 6 Kohlenstoffatomen und

$R^3$ einen Alkylthiorest mit bis zu 6 Kohlenstoffatomen, die Aminogruppe, einen Alkyl- oder Dialkylaminorest mit jeweils bis zu 5 Kohlenstoffatomen in einem Alkylrest bedeuten,

Schädlinge aus der Klasse der Insekten, Milben und Nematoden wirksamer bekämpfen als die bekannten O,O-Dialkyl-1,3,4-oxadiazolylmethylthiolphosphate.

$R^1$ und $R^2$ in Formel I können gleich oder verschieden sein und für einen verzweigten oder unverzweigten Alkylrest mit bis zu 6 Kohlenstoffatomen, wie Methyl, Äthyl, einen Propyl-, Butyl-, Pentyl- oder Hexylrest stehen. $R^3$ in Formel I bedeutet einen unverzweigten oder verzweigten Alkylthiorest mit bis zu 6 Kohlenstoffatomen, wie Methylthio, Äthylthio, n-Propylthio, Isopropylthio, sec.-Butylthio, Isobutylthio, tert.-Butylthio, 3-Methyl-n-butylthio, 2-Methyl-n-butylthio, 4-Methyl-n-pentylthio, 4-Äthyl-n-butylthio, Neopentylthio, oder einen Alkylamino- oder Dialkylaminorest mit bis zu 5 Kohlenstoffatomen in einer Alkylgruppe, wie Methylamino, Äthylamino, Dimethylamino, Diäthylamino, n-Propylamino, Isopropylamino, Di-n-butylamino, n-Butylamino, n-Pentylamino, 3-Methyl-n-butylamino, Di-n-pentylamino.

Bevorzugte Substituenten $R^1$ und $R^2$ sind Alkylreste mit bis zu 3 Kohlenstoffatomen, wie Methyl, Äthyl, n-Propyl, Isopropyl, insbesondere Äthyl, für $R^3$ Alkylthioreste mit bis zu 4 Kohlenstoffatomen, wie Methylthio, Äthylthio, n-Propylthio, Isopropylthio, n-Butylthio, Isobutylthio, sec.-Butylthio und Alkylamino- oder Dialkylaminoreste mit bis zu 3 Kohlenstoffatomen in einer Alkylgruppe, wie Methylamino, Äthylamino, Diäthylamino, n-Propylamino, Isopropylamino.

Gegenstand der Erfindung ist weiterhin ein Verfahren zur Herstellung von 1,3,4-Oxadiazolylmethylthiolphosphaten der Formel I, das dadurch gekennzeichnet ist, dass man 1,3,4-Oxadiazolylmethylhalogenide der Formel II mit Salzen von Thiophosphorsäureestern der Formeln III nach folgender Reaktionsgleichung umsetzt:

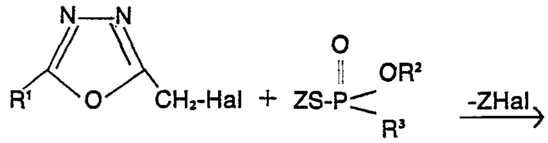


II III

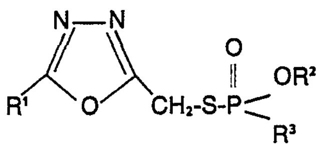

I

Dabei haben die Reste $R^1$, $R^2$ und $R^3$ die obenangegebenen Bedeutungen, Hal steht für Halogen und Z für ein Alkaliion, ein Äquivalent Erdalkaliion oder für ein gegebenenfalls durch Alkylreste substituiertes Ammoniumion.

Als Halogen kommen Fluor, Chlor, Brom, Jod in Betracht, bevorzugt sind Chlor und Brom. Als Alkaliionen sind Natrium und Kalium, als Erdalkaliionen Magnesium und Calcium und als Ammoniumion das unsubstituierte Ion, Methyl-, Äthyl-, Propyl-, i-Propyl-, Dimethyl-, Diäthyl-, Trimethyl-, Triäthyl-, Tetramethyl- oder Tetraäthylammonium bevorzugt.

Die Umsetzung wird zweckmässigerweise in gegenüber den Reaktionsteilnehmern inerten Lösungs- oder Verdünnungsmitteln durchgeführt. Hierfür sind beispielsweise geeignet: Wasser; Alkohole, wie Methanol, Äthanol, Propanol; Äther, wie Tetrahydrofuran, Dioxan, Diglykoldimethyläther; Ketone, wie Aceton, Methyläthylketon, Diäthylketon; aromatische Kohlenwasserstoffe, wie Toluol, Xylole, Chlorbenzole; Nitrile, wie Acetonitril; Dimethylformamid; Dimethylsulfoxid. Auch Gemische dieser Lösungs- und Verdünnungsmittel können verwendet werden. Bei Verwendung von nichtwässrigen Lösungsmitteln kann die Zugabe einer katalytischen Menge Kaliumjodid zur Erhöhung der Reaktivität zweckmässig sein.

Zur Durchführung des Verfahrens setzt man die Ausgangsstoffe im allgemeinen in äquimolaren Verhältnissen ein. Ein Überschuss der einen oder anderen Reaktionskomponente kann in einigen Fällen Vorteile bringen.

Die Reaktionstemperatur kann innerhalb eines grösseren Bereiches variiert werden. Im allgemeinen arbeitet man bei Temperaturen im Bereich von 0 bis 150°C, vorzugsweise im Bereich von 20 bis 100°C.

Die als Ausgangsstoffe verwendeten 1,3,4-Oxadiazolylmethylhalogenide sind aus der DE-OS 1 942 993 und der DE-OS 1 962 372 bekannt und können nach den dort beschriebenen Verfahren hergestellt werden. Ein weiterer Syntheseweg ist die Umsetzung literaturbekannter Säurehydrazide der Formel IV mit Orthochloressigsäuretriäthylestern der Formel V entsprechend folgender Reaktionsgleichung:

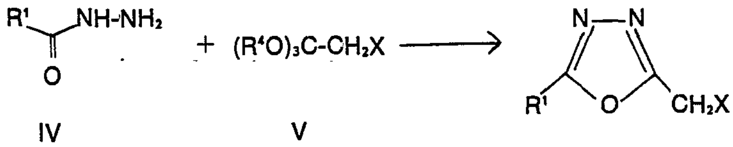

IV V

Dabei hat der Rest $R^1$ die obenangegebenen Bedeutungen, $R^4$ bedeutet Methyl oder Äthyl und X Brom oder Chlor.

Die phosphorsauren Salze der Formel III können nach den in Houben-Weyl, Methoden der organischen Chemie, Band XII/2, Seite 131 ff, Georg Thieme-Verlag, Stuttgart (1964) oder nach dem in der DE-OS 2 506 618 beschriebenen Verfahren hergestellt werden.

Die folgenden Beispiele erläutern die Herstellung der 1,3,4-Oxadiazolylmethylthiolphosphate. Gewichtsteile verhalten sich zu Volumenteilen wie kg zu l.

Beispiel 1

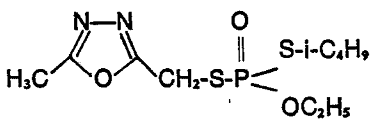

1118 Gewichtsteile Orthochloressigsäuretriäthylester und 1 Gewichtsteil Orthophosphorsäure werden bei 110 bis 120°C mit 222 Gewichtsteilen Essigsäurehydrazid in Portionen versetzt und der entstandene Alkohol über eine Brücke abdestilliert. Danach wird 1 1/2 Stunden bei 110 bis 120°C gerührt und anschliessend über eine Kolonne fraktioniert. Die bei 73 bis 75°C/0,53 mbar abdestillierte Fraktion ist 98%iges 5-Methyl-1,3,4-oxadiazolylmethylchlorid vom $n_D^{25}$ = 1,4758; Ausbeute 77% d.Th.

13,3 Gewichtsteile 5-Methyl-1,3,4-oxadiazolylmethylchlorid und 26 Gewichtsteile O-Äthyl-S-isobutyl-dithiophosphorsaures Dimethylammonium werden in 100 Volumenteilen Wasser und 5 Volumenteilen Dimethylformamid 6 Stunden lang bei 80°C gerührt. Nach dem Abkühlen wird das ausgefallene Öl abgetrennt und in Toluol aufgenommen. Die Toluollösung wird mit verdünnter Natriumhydrogencarbonatlösung und Wasser gewaschen und über Natriumsulfat getrocknet. Anschliessend wird filtriert und vom Toluol befreit. Der Rückstand wird bei 60°C/0,27 mbar andestilliert. Man erhält 24 Teile einer hellgelben öligen Flüssigkeit; Ausbeute 77,5% d.Th.

$C_{10}H_{19}N_2PO_3S_2$(310)

ber.: C 38,7 H 6,2 N 9,0 P 10,0 S 20,7

gef.: C 38,8 H 5,9 N 8,8 P 9,9 S 20,6

60-MHz — NMR-Spektrum in $CDCl_3$ (δ-Werte): 1,05 (6H); 1,38 (3H); 1,6-2,3 (1H); 2,55 (3H); 2,81 (2H); 4,0-4,5 (2H+2H).

Beispiel 2

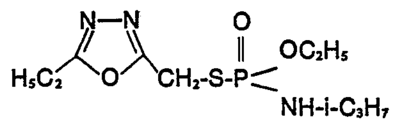

11,7 Gewichtsteile 5-Äthyl-1,3,4-oxadiazolylmethylchlorid, 20 Gewichtsteile O-Äthyl-N-isopropylamido-thiophosphorsaures Diäthylammonium werden mit 0,5 Gewichtsteilen Kaliumjodid in 150 Volumenteilen Aceton 12 Stunden unter Rückfluss gekocht. Nach dem Abkühlen wird filtriert und eingeengt. Der Rückstand wird in Methylenchlorid aufgenommen, dann wird mit Wasser ausgeschüttelt. Nach dem Trocknen über Natriumsulfat wird das Lösungsmittel entfernt und bei 60°C/0,27 mbar andestilliert. Es werden 22,1 Teile einer hellgelben öligen Flüssigkeit isoliert; Ausbeute 94% d.Th.

$C_{10}H_{20}N_3PO_3S$(293)

ber.: C 41,0 H 6,9 N 14,3 S 10,9 P 10,6

gef.: C 40,8 H 6,8 N 14,3 S 10,8 P 10,2

60-MHz — NMR-Spektrum in $CDCl_3$ (δ-Werte): 1,1-1,55 (3H+6H+3H); 2,88 (2H); 3,2-3,7 (1H); 3,9-4,3 (2H+2H).

Folgende Verbindungen erhält man beispielsweise in analoger Weise:

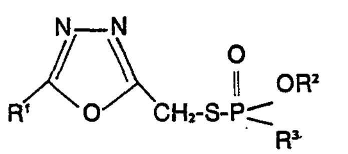

| Nr. | $R^1$ | $R^2$ | $R^3$ | NMR-Daten (MHz; LM) δ-Wert |
|---|---|---|---|---|
| 3 | $CH_3$ | $C_2H_5$ | sec-$C_4H_9$-S | (60; $CDCl_3$) 0,89 (3H); 1,05-1,76 (3H); 3H+2H; 2,38 (3H); 2,9-3,6 (1H); 3,8-4,4 (2H+2H) |
| 4 | $CH_3$ | $C_2H_5$ | n-$C_3H_7$-S | (60; $CDCl_3$) 1,02 (3H); 1,36 (3H); 1,80 (2H); 2,54 (3H); 2,5-3,1 (2H); 4,1-4,4 (2H+2H) |
| 5 | $CH_3$ | $C_2H_5$ | NH-i-$C_3H_7$ | (220; $CDCl_3$) 1,0-1,3 (CH+3H); 2,5 (3H); 3,5 (1H); 3,9 (1H); 4,1-4,3 (2H+2H) |

Tabelle (Fortsetzung)

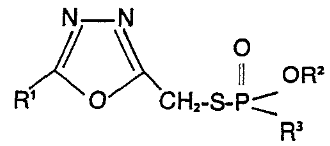

| Nr. | $R^1$ | $R^2$ | $R^3$ | NMR-Daten (MHz; LM) δ-Wert |
|---|---|---|---|---|
| 6 | $CH_3$ | $C_2H_5$ | $N(CH_3)_2$ | (80; $CDCl_3$) 1,3 (3H); 2,5 (6H); 2,7 (3H); 3,8-4,2 (2H+2H) |
| 7 | $C_2H_5$ | $C_2H_5$ | n-$C_3H_7$-S | (60; $CDCl_3$) 1,0 (3H); 1,2-1,55 (3H+3H); 1,7 (2H); 2,5-3,2 (2H+2H); 3,9-4,5 (2H+2H) |
| 8 | $C_2H_5$ | $C_2H_5$ | i-$C_3H_7$-S | (60; $CDCl_3$) 1,1-1,6 (3H+3H+6H); 2,8 (2H); 3,1-3,8 (1H); 4,0-4,4 (2H+2H) |
| 9 | $C_2H_5$ | $C_2H_5$ | $H_3C$-S | (60; $CDCl_3$) 1,33 (3H+3H); 2,34 (3H); 3,8 (2H); 4,05-4,4 (2H+2H) |
| 10 | $C_2H_5$ | $C_2H_5$ | sec-$C_4H_9$-S | (60; $CDCl_3$) 1,05 (6H); 1,2-1,6 (3H+3H); 1,7 (2H); 2,87 (2H); 3,1-3,6 (1H); 4,1-4,4 (2H+2H) |
| 11 | $C_2H_5$ | $C_2H_5$ | i-$C_4H_9$-S | (60; $CDCl_3$) 1,03 (6H); 1,4 (6H); 1,7-2,1 (1H); 2,6-3,1 (2H+2H); 4,1-4,4 (2H+2H) |
| 12 | $C_2H_5$ | $C_2H_5$ | $N(CH_3)_2$ | (220; $CDCl_3$) 1,25-1,48 (3H+3H); 2,7 (6H); 2,9 (2H); 4,1-4,3 (2H+2H) |
| 13 | i-$C_3H_7$ | $C_2H_5$ | sec-$C_4H_9$-S | (60; $CDCl_3$) 1,03 (3H); 1,8 (6H); 1,65 (2H); 2,9-3,6 (1H+1H); 4,05-4,4 (2H+2H) |
| 14 | i-$C_3H_7$ | $C_2H_5$ | i-$C_4H_9$-S | (80; $CDCl_3$) 1,0 (6H); 1,2-1,5 (3H+6H); 1,9 (1H); 2,65-2,95 (2H); 2,95-3,3 (1H); 4,08-4,35 (2H+2H) |
| 15 | i-$C_3H_7$ | $C_2H_5$ | n-$C_3H_7$-S | (60; $CDCl_3$) 1,0 (3H); 1,2-1,9 (3H+6H+2H); 2,6-3,3 (2H+1H); 4,05-4,4 (2H+2H) |
| 16 | i-$C_3H_7$ | $C_2H_5$ | NH-i-$C_3H_7$ | (220; $CDCl_3$) 1,1 (6H); 1,2 (3H); 1,3 (6H); 3,05 (1H); 3,4 (1H); 3,85 (1H); 3,95-4,1 (2H+2H) |
| 17 | i-$C_3H_7$ | $C_2H_5$ | $N(CH_3)_2$ | (220; $CDCl_3$) 1,3 (3H); 1,35 (6H); 2,7 (6H); 3,2 (1H); 4,1-4,25 (2H+2H) |

Die erfindungsgemässen 1,3,4-Oxadiazolylmethylthiolphosphate können im Pflanzenschutz sowie auf dem Hygiene-, Vorratsschutz- und Veterinärsektor als Schädlingsbekämpfungsmittel eingesetzt werden. Sie sind geeignet, Schädlinge aus der Klasse der Insekten, Milben und Nemathelminthes wirksam zu bekämpfen.

Zu den schädlichen Insekten gehören aus der Ordnung der Schmetterlinge (Lepidoptera) beispielsweise Plutella maculipennis (Kohlschabe), Leucoptera coffeella (Kaffeemotte), Hyponomeuta malinellus (Apfelbaumgespinstmotte), Argyresthia conjugella (Apfelmotte), Sitotroga cerealella (Getreidemotte), Phthorimaea operculella (Kartoffelmotte), Capua reticulana (Apfelschalenwickler), Sparganothis pilleriana (Springwurm), Cacoecia murinana (Tannentriebwickler), Tortrix viridana (Eichenwickler), Clysia ambiguella (Heu- und Sauerwurm), Evetria buoliana (Kieferntriebwickler), Polychrosis botrana (Bekreuzter Traubenwickler), Cydia pomonella (Obstmade), Laspeyresia molesta (Pfirsichtriebbohrer), Laspeyresia funebrana (Pflaumenwickler), Ostrinia nubilalis (Maiszünsler), Loxostege sticticalis (Rübenzünsler), Ephestia kuehniella (Mehlmotte), Chilo suppressalis (Reisstengelbohrer), Galleria mellonella (Wachsmotte), Malacosoma neustria (Ringelspinner), Dendrolimus pini (Kiefernspinner), Thaumatopoea pityocampa (Pinienprozessionsspinner), Phalera bucephala (Mondfleck), Cheimatobia brumata (Kleiner Frostspanner), Hibernia defoliaria (Grosser Frostspanner), Bupalus piniarus (Kiefernspanner), Hyphantria cunea (Weisser Bärenspinner), Agrotis segetum (Wintersaateule), Agrotis ypsilon (Ypsiloneule), Barathra brassicae (Kohleule), Cirphis unipuncta (Heerwurm), Prodenia litura (Baumwollraupe), Laphygma exigua (Rüben-Heerwurm), Panolis flammea (Forleule), Earias insulana (Baumwollkapselwurm), Plusia gamma (Gammaeule), Alabama argillacea (Baumwollblattwurm), Lymantria dispar (Schwammspinner), Lymantria monacha

(Nonne), Pieris brassicae (Kohlweissling), Aporia crataegi (Baumweissling);

aus der Ordnung der Käfer (Coleoptera) beispielsweise Blitophaga undata (Schwarzer Rübenaaskäfer), Melanotus communis (Drahtwurm), Limonius californicus (Drahtwurm), Agriotes lineatus (Saatschnellkäfer), Agriotes obscurus (Humusschnellkäfer), Agrilus sinuatus (Birnbaum-Prachtkäfer), Meligethes aeneus (Rapsglanzkäfer), Atomaria linearis (Moosknopfkäfer), Epilachna varivestris (Mexikanischer Bohnenkäfer), Phyllopertha horticola (Junikäfer), Popillia japonica (Japankäfer), Melolontha melolontha (Feldmaikäfer), Melolontha hippocastani (Waldmaikäfer), Amphimallus solstitialis (Brachkäfer), Crioceris asparagi (Spargelhähnchen), Lema melanophus (Getreidehähnchen), Leptinotarsa decemlineata (Kartoffelkäfer), Phaedon cochleariae (Meerrettich-Blattkäfer), Phyllotreta nemorum (Kohlerdfloh), Chaetocnema tibialis (Rübenflohkäfer), Phylloides chrysocephala (Raps-Flohkäfer), Diabrotica 12-punctata (Südlicher Maiswurzelwurm), Cassida nebulosa (Nebliger Schildkäfer), Bruchus lentis (Linsenkäfer), Bruchus rufimanus (Pferdebohnenkäfer), Bruchus pisorum (Erbsenkäfer), Sitona lineatus (Linierter Blattrandkäfer), Otiorrhynchus sulcatus (Gefurchter Lappenrüssler), Otiorrhynchus ovatus (Erdbeerwurzelrüssler), Hylobies abietis (Grosser Brauner Rüsselkäfer), Byctiscus betulae (Rebenstecher), Anthonomus pomorum (Apfelblütenstecher), Anthonomus grandis (Kapselkäfer), Ceuthorrhynchus assimilis (Kohlschotenrüssler), Ceuthorrhynchus napi (Grosser Kohltriebrüssler), Sitophilus granaria (Kornkäfer), Anisandrus dispar (Ungleicher Holzborkenkäfer), Ips typographus (Buchdrucker), Blastophagus piniperda (Gefurchter Wandgärtner);

aus der Ordnung der Zweiflügler (Diptera) beispielsweise Mayetiola destructor (Hessenfliege), Dasyneura brassicae (Kohlschoten-Gallmücke), Contarinia tritici (Gelbe Weizen-Gallmücke), Haplodiplosis equestris (Sattelmücke), Tipula paludosa (Wiesenschnake), Tipula oleracea (Kohlschnake), Dacus cucurbitae (Melonenfliege), Dacus oleae (Olivenfliege), Ceratitis capitata (Mittelmeer-Fruchtfliege), Rhagoletis cerasi (Kirschfruchtfliege), Rhagoletis pomonella (Apfelmade), Anastrepha ludens (Mexikanische Fruchtfliege), Oscinella frit (Fritfliege), Phorbia coarctata (Brachfliege), Phorbia antiqua (Zwiebelfliege), Phorbla brassicae (Kleine Kohlfliege), Pegomya hyoscyami (Rübenfliege);

aus der Ordnung der Hautflügler (Hymenoptera) beispielsweise Athalia rosae (Rübenblattwespe), Hoplocampa minuta (Pflaumensägewespe), Monomorium pharaonis (Pharaoameise), Solenopsis geminata (Feuerameise), Atta sexdens (Blattschneiderameise);

aus der Ordnung der Wanzen (Heteroptera) beispielsweise Nezara viridula (Grüne Reiswanze), Eurygaster integriceps (Asiatische Getreidewanze), Blissus leucopterus (Chinch bug), Dysdercus cingulatus (Kapok-Wanze), Dysdercus intermedius (Baumwollwanze), Piesma quadrata (Rübenwanze), Lygus pratensis (Gemeine Wiesenwanze);

aus der Ordnung der Pflanzensauger (Homoptera) beispielsweise Perkinsiella saccharicida (Zuckerrohrzikade), Nilaparvata lugens (Braune Zikade), Empoasca fabae (Kartoffelzikade), Psylla mali (Apfelblattsauger), Psylla piri (Birnblattsauger), Trialeurodes vaporariorum (Weisse Fliege), Aphis fabae (Schwarze Bohnenlaus), Aphis pomi (Grüne Abpfellaus), Aphis sambuci (Holunderblattlaus), Aphidula nastrutii (Kreuzdornblattlaus), Cerosipha gossypii (Gurkenblattlaus), Sappaphis mali (Rosige Apfellaus), Sappaphis mala (Mehlige Birnblattlaus), Dysaphis radicola (Mehlige Apfelfalterlaus), Brachycaudus cardui (Grosse Pflaumenblattlaus), Brevicoryne brassicae (Kohlblattlaus), Phorodon humuli (Hopfenblattlaus), Rhopalomyzus ascalonicus (Zwiebellaus), Myzodes persicae (Grüne Pfirsichlaus), Myzus cerasi (Schwarze Sauerkirschenlaus), Dysaulacorthum pseudosolani (Gefleckte Kartoffellaus), Acyrthosiphon onobrychis (Grüne Erbsenlaus), Macrosiphon rosae (Grosse Rosenblattlaus), Megoura viciae (Wickenlaus), Schizoneura lanuginosa (Birnenblattlaus), Pemphigus bursarius (Salatwurzellaus), Dreyfusia nordmannianae (Tannentrieblaus), Dreyfusia piceae (Weisstannenstammlaus), Adelges laricis (Rote Fichtengallenlaus), Viteus vitifolii (Reblaus);

aus der Ordnung der Termiten (Isoptera) beispielsweise Reticulitermes lucifugus;

aus der Ordnung der Geradflügler (Orthoptera) beispielsweise Forficula auricularia (Gemeiner Ohrwurm), Acheta domestica (Heimchen), Gryllotalpa gryllotalpa (Maulwurfsgrille), Tachycines asynamorus (Gewächshausschrecke), Locusta migratoria (Wanderheuschrecke), Stauronotus maroccanus (Marokkanische Wanderheuschrecke), Schistocerca peregrina (Wanderheuschrecke), Nomadacris septemfasciata (Wanderheuschrekke), Melanoplus spretus (Felsengebirgsheuschrecke), Melanoplus femur-rubrum (Rotbeinige Heuschrecke), Blatta orientalis (Küchenschabe), Blattella germanica (Deutsche Schabe), Periplaneta americana (Amerikanische Schabe), Blabera gigantea (Riesenschabe).

Zur Klasse der Arachnoidea gehören Milben und Zecken (Acarina) beispielsweise Ixodes ricinus (Holzblock), Ornithodorus moubata, Amblyomma americanum, Dermacentor silvarum, Boophilus microplus, Tetranychus telarius, Tetranychus atlanticus, Tetranychus pacificus, Paratetranychus pilosus, Bryobia praetiosa.

Zur Klasse der Nemathelminthes zählen beispielsweise Wurzelgallennematoden, z.B. Meloidogyne incognita, Meloidogyne hapla, Meloidogyne javanica, Zysten bildende Nematoden, z.B. Heterodera rostochiensis, Heterodera schachtii, Heterodera avenae, Heterodera glycines, Heterodera trifolii, Stock- und Blattälchen, z.B. Ditylenchus dipsaci, Ditylenchus destructor, Pratylenchus neglectus, Pratylenchus penetrans, Partylenchus goodeyi, Paratylenchus curvitatus sowie Tylenchorhynchus dubius, Tylenchorhynchus claytoni, Rotylenchus robustus, Heliocotylenchus multicinctus, Radopholus similis, Belonolaimus longicaudatus, Longidorus elongatus, Trichodorus primitivus.

Die Wirkstoffe können als solche, in Form ihrer Formulierungen oder den daraus bereiteten Anwendungsmöglichkeiten, z.B. in Form von direkt versprühbaren Lösungen, Pulvern, Suspensionen oder Dispersionen, Emulsionen, Öldispersionen, Pasten, Stäubemitteln, Streumitteln, Granulaten durch Versprühen, Vernebeln, Verstäuben, Verstreuen oder Giessen angewendet werden. Die Anwendungsformen richten sich ganz nach den Verwendungszwecken; sie sollten in jedem Fall möglichst die feinste Verteilung der erfindungsgemässen Wirkstoffe gewährleisten.

Zur Herstellung von direkt versprühbaren Lösungen, Emulsionen, Pasten oder Öldispersionen kommen Mineralölfraktionen von mittlerem bis hohem Siedepunkt, wie Kerosin oder Dieselöl, ferner Kohlenteeröle pflanzlichen oder tierischen Ursprungs, aliphatische, cyclische und aromatische Kohlenwasserstoffe, z.B. Benzol, Toluol, Xylol, Paraffin, Tetrahydronaphthalin, alkylierte Naphthaline oder deren Derivate, z.B. Methanol, Äthanol, Propanol, Butanol, Chloroform, Tetrachlorkohlenstoff, Cyclohexanol, Cyclohexanon, Chlorbenzol, Isophoron, stark polare Lösungsmittel, z.B. Dimethylformamid, Dimethylsulfoxid, N-Methylpyrrolidon, Wasser, in Betracht.

Wässrige Anwendungsformen können aus Emulsionskonzentraten, Pasten oder netzbaren Pulvern (Spritzpulvern, Öldispersionen) durch Zusatz von Wasser bereitet werden. Zur Herstellung von Emulsionen, Pasten oder Öldispersionen können die Substanzen als solche oder in einem Öl oder Lösungsmittel gelöst, mittels Netz-, Haft-, Dispergier- oder Emulgiermittel in Wasser homogenisiert werden. Es können aber auch aus wirksamer Substanz Netz-, Haft-, Dispergier- oder Emulgiermittel und eventuell Lösungsmittel oder Öl bestehende Konzentrate hergestellt werden, die zur Verdünnung mit Wasser geeignet sind.

Als oberflächenaktive Stoffe kommen Alkali-, Erdalkali-, Ammoniumsalze von Ligninsulfonsäure, Naphthalinsulfonsäure, Phenolsulfonsäure, Alkylarylsulfonate, Alkylsulfate, Alkylsulfonate, Alkali- und Erdalkalisalze der Dibutylnaphthalinsulfonsäure, Lauryläthersulfat, Fettalkoholsulfate, fettsaure Alkali- und Erdalkalisalze, Salze sulfatierter Hexadecanole, Heptadecanole, Octadecanole, Salze von sulfatiertem Fettalkoholglykoläther, Kondensationsprodukte von sulfoniertem Naphthalin und Naphthalinderivaten mit Formaldehyd, Kondensationsprodukte des Naphthalins beziehungsweise der Naphthalinsulfonsäuren mit Phenol und Formaldehyd, Polyoxyäthylenoctylphenoläther, äthoxyliertes Isooctylphenol, Octylphenol, Nonylphenon, Alkylphenolpolyglykoläther, Tributylphenylpolyglykoläther, Alkylarylpolyätheralkohole, Isotridecylalkohol, Fettalkoholäthylenoxid-Kondensate, äthoxyliertes Rizinusöl, Polyoxyäthylenalkyläther, äthoxyliertes Polyoxypropylen, Laurylalkoholpolyglykolätheracetal, Sorbitester, Lignin, Sulfitablaugen und Methylcellulose in Betracht.

Pulver-, Streu- und Stäubemittel können durch Mischen oder gemeinsames Vermahlen der wirksamen Substanzen mit einem festen Trägerstoff hergestellt werden.

Beispiele für Formulierungen sind:

I. 3 Gewichtsteile O-Äthyl-S-isobutyl-S-(5-methyl-1,3,4-oxadiazolyl-2-methyl)-dithiophosphat werden mit 97 Gewichtsteilen feinteiligem Kaolin innig vermischt. Man erhält auf diese Weise ein Stäubemittel, das 3 Gew.-% des Wirkstoffs enthält.

II. 30 Gewichtsteile O-Äthyl-S-n-propyl-S-(5-methyl-1,3,4-oxadiazolyl-2-methyl)-dithiophosphat werden mit einer Mischung aus 92 Gewichtsteilen pulverförmigem Kieselsäuregel und 8 Gewichtsteilen Paraffinöl, das auf die Oberfläche dieses Kieselsäuregels gesprüht wurde, innig vermischt. Man erhält auf diese Weise eine Aufbereitung des Wirkstoffs mit guter Haftfähigkeit.

III. 20 Gewichtsteile O-Äthyl-S-n-propyl-S-(5-äthyl-1,3,4-oxadiazolyl-2-methyl)-dithiophosphat werden in einer Mischung gelöst, die aus 80 Gewichtsteilen Xylol, 10 Gewichtsteilen des Anlagerungsproduktes von 8 bis 10 Mol Äthylenoxid an 1 Mol Ölsäure-N-monoäthanolamid, 5 Gewichtsteilen Calciumsalz der Dodecylbenzolsulfonsäure und 5 Gewichtsteilen des Anlagerungsproduktes von 40 Mol Äthylenoxid an 1 Mol Ricinusöl besteht. Durch Ausgiessen und feines Verteilen der Lösung in 100 000 Gewichtsteilen Wasser erhält man eine wässrige Dispersion, die 0,02 Gew.-% des Wirkstoffs enthält.

IV. 20 Gewichtsteile O-Äthyl-S-n-propyl-S-(5-methyl-1,3,4-oxadiazolyl-2-methyl)-dithiophosphat werden in einer Mischung gelöst, die aus 40 Gewichtsteilen Cyclohexanon, 30 Gewichtsteilen Isobutanol, 20 Gewichtsteilen des Anlagerungsproduktes von 7 Mol Äthylenoxid an 1 Mol Isooctylphenol und 10 Gewichtsteilen des Anlagerungsproduktes von 40 Mol Äthylenoxid an 1 Mol Ricinusöl besteht. Durch Eingiessen und feines Verteilen der Lösung in 100 000 Gewichtsteilen Wasser erhält man eine wässrige Dispersion, die 0,02 Gewichtsprozent des Wirkstoffs enthält.

Granulate, z.B. Umhüllungs-, Imprägnierungs- und Homogengranulate, können durch Bindung der Wirkstoffe an feste Trägerstoffe hergestellt werden. Feste Trägerstoffe sind z.B. Mineralerden, wie Silicagel, Kieselsäuren, Kieselgele, Silikate, Talkum, Kaolin, Attaclay, Kalkstein, Kalk, Kreide, Bolus, Löss, Ton, Dolomit, Diatomeenerde, Calcium- und Magnesiumsulfat, Magnesiumoxid, gemahlene Kunststoffe, Düngemittel, wie z.B. Ammoniumsulfat, Ammoniumphosphat, Ammoniumnitrat, Harnstoffe und pflanzliche Produkte, wie Getreidemehl, Baumrinden-, Holz- und Nussschalenmehl, Cellulosepulver und andere feste Trägerstoffe.

Die Formulierungen enthalten im allgemeinen

zwischen 0,1 und 95 Gew-% Wirkstoff, vorzugsweise zwischen 0,5 und 90 Gew.-%.

Die Wirkstoffkonzentrationen in den anwendungsfertigen Zubereitungen können in grösseren Bereichen variiert werden. Im allgemeinen liegen sie zwischen 0,0001 und 10%, vorzugsweise zwischen 0,01 und 1%.

Die Wirkstoffe können auch mit gutem Erfolg im Ultra-Low-Volume-Verfahren (ULV) verwendet werden, wobei es möglich ist, Formulierungen mit über 95 Gew.-% Wirkstoff oder sogar den Wirkstoff ohne Zusätze auszubringen.

Zu den Wirkstoffen können Öle verschiedenen Typs, Herbizide, Fungizide, andere Insektizide, Bakterizide, gegebenenalls auch erst unmittelbar vor der Anwendung (Tankmix), zugesetzt werden. Diese Mittel können zu den erfindungsgemässen Mitteln im Gewichtsverhältnis 1 : 10 bis 10 : 1 zugemischt werden.

Beispielsweise können folgende Mittel zugemischt werden: 1,2-Dibrom-3-chlorpropan, 1,3-Dichlorpropen, 1,3-Dichlorpropen + 1,2-Dichlorpropan, 1,2-Dibrom-äthan, 2-sec.-Butyl-phenyl-N-methylcarbamat, o-Chlorphenyl-N-methylcarbamat, 3-Isopropyl-5-methylphenyl-N-methylcarbamat, o-Isopropoxyphenyl-N-methylcarbamat, 3,5-Dimethyl-4-methylmercapto-phenyl-N-methylcarbamat, 4-Dimethylamino-3,5-xylyl-N-methylcarbamat, 2-(1,3-Dioxolan-2-yl)-phenyl-N-methylcarbamat, 1-Naphthal-N-methylcarbamat, 2,3-Dihydro-2,2-dimethyl-benzofuran-7-yl-N-methylcarbamat, 2,2-Dimethyl-1,3-benzodioxol-4-yl-N-methylcarbamat, 2-Dimethylamino-5,6-dimethyl-4-pyrimidinyl-dimethylcarbamat, 2-Methyl-2-(methylthio)-propionaldehyd-O-(methylcarbamoyl)-oxim, S-Methyl-N-[(methylcarbamoyl)-oxy]-thio-acetimidat, Methyl-N',N'-dimethyl-N-[(methylcarbamoyl)-oxy]-1-thiooxamidat, N-(2-Methyl-4-chlor-phenyl)-N',N'-dimethylformamidin, Tetrachlorthiophen, 1-(2,6-Difluor-benzoyl)-3-(4-chlor-phenyl)-harnstoff, O,O-Dimethyl-O-(p-nitrophenyl)-phosphorthioat, O,O-Diäthyl-O-(p-nitrophenyl)-phosphorthioat, O-Äthyl-O-(p-nitrophenyl)-phenyl-phosphonothioat, O,O-Dimethyl-O-(3-methyl-4-nitrophenyl-phosphorthioat, O,O-Diäthyl-O-(2,4-dichlorphenyl)-phosphorthioat, O-Äthyl-O-(2,4-dichlorpenyl)-phenyl-phosphonothioat, O,O-Dimethyl-O-(2,4,5-trichlorphenyl)-phosphorthioat, O-Äthyl-O-(2,4,5-trichlorphenyl)-äthyl-phosphonothioat, O,O-Dimethyl-O-(4-brom-2,5-dichlorphenyl)-phosphorthioat, O,O-Dimethyl-O-(2,5-dichlor-4-jod-phenyl)-phosphorthioat, O,O-Dimethyl-O-(3-methyl-4-methylthiophenyl)-phosphorthioat, O-Äthyl-O-(3-methyl-4-methylthiophenyl)-isopropyl-phosphoramidat, O,O-Diäthyl-O-[p-(methylsulfinyl)phenyl]-phosphorthioat, O-Äthyl-S-phenyl-äthyl-phosphonodithioat, O,O-Diäthyl-[2-chlor-1-(2,4-dichlorphenyl)-vinyl]-phosphat, O,O-Dimethyl-[2-chlor-1-(2,4,5-trichlorphenyl)]-vinyl-phosphat, O,O-Dimethyl-S-(1'-phenyl)-äthylacetat-phosphordithioat, Bis-(dimethylamino)-fluorphosphinoxid, Octamethyl-pyrophosphoramid, O,O,O,O-Tetraäthyldithio-pyrophosphat, S-Chlormethyl-O,O-diäthyl-phosphordithioat, O-Äthyl-S,S-dipropyl-phosphordithioat, O,O-Dimethyl-O-2,2-dichlorvinyl-phosphat, O,O-Dimethyl-1,2-dibrom-2,2-dichloräthylphosphat, O,O-Dimethyl-2,2,2-trichlor-1-hydroxy-äthylphosphonat, O,O-Dimethyl-S-[1,2-biscarbäthoxy-äthyl-(1)]-phosphordithioat, O,O-Dimethyl-O-(1-methyl-2-carbmethoxy-vinyl)-phosphat, O,O-Dimethyl-S-(N-methyl-carbamoyl-methyl)-phosphordithioat, O,O-Dimethyl-S-(N-methyl-carbamoyl-methyl)-phosphorthioat, O,O-Dimethyl-S-(N-methoxyäthyl-carbamoyl-methyl)-phosphordithioat, O,O-Dimethyl-S-(N-formyl-N-methyl-carbamoylmethyl-phosphordithioat, O,O-Dimethyl-O-[1-methyl-2-(methyl-carbamoyl)-vinyl]-phosphat, O,O-Dimethyl-O-[(1-methyl-2-dimethylcarbamoyl)-vinyl]-phosphat, O,O-Dimethyl-O-[(1-methyl-2-chlor-2-diäthylcarbamoyl)-vinyl]-phosphat, O,O-Diäthyl-S-(äthylthio-methyl)-phosphordithioat, O,O-Diäthyl-S-[(p-chlorphenylthio)-methyl]-phosphordithioat, O,O-Dimethyl-S-(2-äthylthioäthyl)-phosphorthioat, O,O-Dimethyl-S-(2-äthylthioäthyl)-phosphordithioat, O,O-Dimethyl-S-(2-äthylsulfinyl-äthyl)-phosphorthioat, O,O-Diäthyl-S-(2-äthylthio-äthyl)-phosphordithioat, O,O-Diäthyl-S-(2-äthylsulfinyl-äthyl)-phosphorthioat, O,O-Diäthyl-thiophosphoryliminophenyl-acetonitril, O,O-Diäthyl-S-(2-chlor-1-phthalimidoäthyl)-phosphordithioat, O,O-Diäthyl-S-[6-chlor-benzoxazolon-(2)-yl-(3)]-methyldithiophosphat, O,O-Dimethyl-S-[2-methoxy-1,3,4-thiadiazol-5-[4H]-onyl-(4)-methyl]-phosphordithioat, O,O-Diäthyl-O-[3,5,6-trichlor-pyridyl-(2)]-phosphorthioat, O,O-Diäthyl-O-(2-pyrazinyl)-phosphorthioat, O,O-Diäthyl-O-[2-isopropyl-4-methyl-pyrimidinyl-(6)]-phosphorthioat, O,O-Diäthyl-O-[2-(diäthylamino)-6-methyl-4-pyrimidinyl]-thionophosphat, O,O-Dimethyl-S-(4-oxo-1,2,3-benzotriazin-3-[4H]-yl-methyl)-phosphordithioat, O,O-Dimethyl-S-[(4,6-diamino-1,3,5-triazin-2-yl)-methyl]-phosphordithioat, O,O-Diäthyl-(1-phenyl-1,2,4-triazol-3-yl)-thionophosphat, O,S-Dimethyl-phosphor-amido-thioat, O,S-Dimethyl-N-acetyl-phosphoramidothioat, γ-Hexachlorcyclohexan, 1,1-Di-(p-methoxyphenyl)-2,2,2-trichlor-äthan, 6,7,8,9,10,10-Hexachloro-1,5,5a,6,9,9a-hexahydro-6,9-methano-2,4,3-benzodioxa-thiepin-3-oxid, Pyrethrine, DL-2-Allyl-3-methyl-cyclopenten-(2)-on-(1)-yl-(4)-DL-cis,trans-chrysanthemat, 5-Benzyl-furyl-(3)-methyl-DL-cis,trans-chrysanthemat, 3-Phenoxybenzyl(±)-cis,trans-2,2-dimethyl-3-(2,2-dichlorvinyl)-cyclopropancarboxylat, α-Cyano-3-phenoxybenzyl(±)-cis,trans-2,2-dimethyl--3-(2,2-dichlorvinyl)-cyclopropancarboxylat, (s)-α-Cyano-3-phenoxybenzyl-cis(1R,3R)-2,2-dimethyl-3-(2,2-dibromvinyl)-cyclopropancarboxylat, 3,4,5,6-Tetrahydrophthalimidoäthyl-DL-cis,trans-chrysanthemat, 2-Methyl-5-(2-propinyl)-3-furylmethyl-chrysanthemat, α-Cyano-3-phenoxybenzyl-α-isopropyl-4-chlorphenylacetat.

Die folgenden Beispiele belegen die biologische Wirkung der neuen Verbindungen. Vergleichsmittel sind die aus der DE-OS 1 942 993 bekannten Wirkstoffe

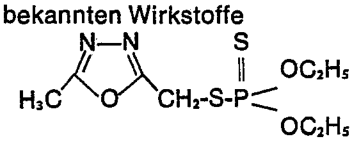
A

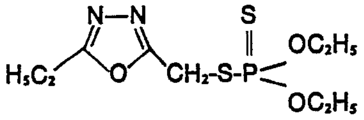

B

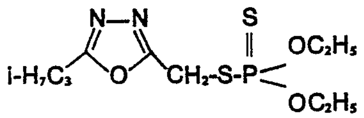

C

Die Numerierung der übrigen Wirkstoffe entspricht der tabellarischen Auflistung.

Beispiel A

Kontaktwirkung auf Schaben (Blatta orientalis)

Der Boden eines 1-l-Einmachglases wird mit der acetonischen Lösung des Wirkstoffs behandelt. Nach dem Verdunsten des Lösungsmittels setzt man je Glas 5 adulte Schaben.

Die Mortalitätsrate wird nach 48 Stunden bestimmt.

| Wirkstoff Nr. | Wirkstoffmenge pro Glas [mg] | Mortalitätsrate [%] |
|---|---|---|
| 1 | 0,2 | 100 |
| | 0,1 | 80 |
| 3 | 0,2 | 100 |
| | 0,1 | 80 |
| 7 | 0,1 | 100 |
| 10 | 0,1 | 100 |
| 13 | 0,1 | 100 |
| 15 | 0,05 | 100 |
| B | 0,25 | 100 |
| | 0,2 | <80 |
| C | 0,25 | 100 |
| | 0,2 | <80 |

Beispiel B

Kontaktwirkung aus Stubenfliegen (Musca domestica); Dauerkontakt

Beide Teile einer Petrischale von 10 cm Durchmesser werden mit insgesamt 2 ml der acetonischen Wirkstofflösung ausgekleidet. Nach dem Verdunsten des Lösungsmittels (ca. 30 Minuten) bringt man je 10 Fliegen in die Schalen. Die Mortalität wird nach 4 Stunden festgestellt.

| Wirkstoff Nr. | Wirkstoffmenge pro Petrischale [mg] | Mortalitätsrate [%] |
|---|---|---|
| 1 | 0,2 | 100 |
| 3 | 0,2 | 100 |
| 5 | 0,2 | 80 |
| 7 | 0,2 | 100 |
| 8 | 0,2 | 80 |
| 10 | 0,2 | 100 |
| 11 | 0,2 | 80 |
| 13 | 0,2 | 80 |
| B | 0,2 | <50 |

Beispiel C

Zuchtversuch mit Stubenfliegen (Musca domestica)

50 g eines Nährbodens aus
100 Teilen Wasser
10 Teilen Bäckerhefe
10 Teilen Trockenmilch und
1 Teil Agar

werden in warmem Zustand mit der wässrigen Aufbereitung des Wirkstoffes gründlich durchmischt.

Nach dem Erkalten belegt man den Nährboden mit ca. 0,1 ml Fliegeneiern und beobachtet deren Entwicklung über ein Woche.

Die Versuchstemperatur liegt bei 20°C.

| Wirkstoff Nr. | Wirkstoff-konzentration im Nährboden [ppm] | Mortalitätsrate [%] |
|---|---|---|
| 1 | 0,5 | 100 |
| 3 | 0,4 | ca. 90 |
| 4 | 1,0 | ca. 90 |
| 7 | 0,5 | 100 |
| 10 | 0,5 | ca. 90 |
| 11 | 0,5 | 100 |
| 13 | 0,5 | 100 |
| 14 | 0,5 | ca. 90 |
| 15 | 0,2 | ca. 90 |
| A | 2,5 | <50 |
| B | 2,5 | <50 |
| C | 1,0 | <50 |

Beispiel D

Frass- und Kontaktwirkung auf Raupen der Kohlschabe (Plutella maculipennis)

Blätter von jungen Kohlpflanzen werden 3 Sekunden lang in die wässrige Wirkstoffemulsion getaucht und nach kurzem Abtropfen auf einen angefeuchteten Filter in eine Petrischale gelegt. Das Blatt wird darauf mit 10 Raupen des 4. Stadiums belegt.

Nach 48 Stunden beurteilt man die Wirkung.

| Wirkstoff Nr. | Konzentration der Wirkstoffemulsion [%] | Mortalitätsrate [%] |
|---|---|---|
| 1 | 0,02 | 100 |
| | 0,01 | ca. 80 |
| 3 | 0,02 | 100 |
| | 0,01 | ca. 80 |
| 4 | 0,02 | 100 |
| | 0,01 | ca. 80 |
| 7 | 0,02 | 100 |
| | 0,01 | ca. 80 |
| 10 | 0,002 | 100 |
| | 0,001 | ca. 80 |
| 13 | 0,005 | 100 |
| | 0,004 | ca. 80 |
| 14 | 0,004 | 100 |
| A | 0,05 | 100 |
| | 0,02 | <50 |
| B | 0,025 | 100 |
| | 0,01 | 50 |
| C | 0,1 | 50 |

Beispiel E
Systemische Wirkung auf Raupen (Prodenia litura)

200 ml Quarzsand werden in 250 ml Polystyrolbecher in Paletten zu 8 Gefässen gegeben. Man belegt jeden Becher — ca. 1 cm unter der Sandoberfläche — mit 5 Maiskörnern. Darauf befeuchtet man mit je 50 ml Wasser und deckt mit einer passenden transparenten Kunststoffhaube ab. Nach 8 Tagen werden die Paletten abgedeckt, nach 10 Tagen erfolgt die Behandlung. Dabei giesst man 40 ml der wässrigen Wirkstoffaufbereitung an die Pflanzen und deckt nach einem weiteren Tag mit 50 ml trockenem Quarzsand ab. Hierdurch soll ein Kontakt der Versuchstiere mit der behandelten Oberfläche vermieden werden.

Auf jeden Becher stellt man einen Plastik-Zylinder (Durchmesser 7 cm), belegt mit je 5 Raupen im 3. Larvenstadium und deckt den Zylinder mit einem Drahtgazedeckel ab.

Nach 4 Tagen beurteilt man die Mortalität in den Gefässen.

| Wirkstoff Nr. | Konzentration der Wirkstoffaufbereitung [%] | Mortalitätsrate [%] |
|---|---|---|
| 1 | 0,05 | 100 |
| 3 | 0,1 | 100 |
| 4 | 0,1 | 100 |
| 7 | 0,1 | 100 |
| 10 | 0,1 | 100 |
| 11 | 0,1 | 100 |
| 15 | 0,05 | 100 |
| A | 0,1 | <50 |
| B | 0,1 | <50 |
| C | 0,1 | <50 |

Beispiel F
Kontaktwirkung auf Blattläuse (Aphis fabae); Spritzversuch

Getopfte Bohnenpflanzen (Vicia faba) mit starken Blattlauskolonien werden in der Spritzkammer mit den wässrigen Wirkstoffaufbereitungen tropfnass gespritzt.

Die Auswertung erfolgt nach 24 Stunden.

| Wirkstoff Nr. | Konzentration der Wirkstoffaufbereitung [%] | Mortalitätsrate [%] |
|---|---|---|
| 1 | 0,01 | 100 |
| 2 | 0,01 | 100 |
| 3 | 0,005 | 100 |
| | 0,002 | ca. 80 |
| 5 | 0,01 | 100 |
| | 0,005 | ca. 80 |
| 10 | 0,01 | 100 |
| 14 | 0,01 | 100 |
| C | 0,01 | ca. 80 |

Beispiel G
Kontaktwirkung auf Zecken (Ornithodorus moubata)

Geprüft wird mit Zecken im 3. Larvenstadium. Dazu taucht man die Tiere, die sich in einem Papierbeutel befinden, für 3 Sekunden in die Prüfemulsion. Die Beutel werden frei aufgehängt. Nach 48 Stunden wird die Wirkung auf die Zekken beurteilt.

| Wirkstoff Nr. | Wirkstoff-konzentration als Emulsion [ppm] | Mortalitätsrate [%] |
|---|---|---|
| 4 | 5 | 100 |
| 10 | 5 | 100 |
| 11 | 4 | 100 |
| 13 | 10 | 100 |
| 14 | 10 | 100 |
| A | 25 | 100 |
| | 10 | <50 |
| C | 50 | 100 |
| | 25 | <50 |

Beispiel H

Wirkung auf Wurzelgallennematoden (Meloidogyne incognita)

Die Versuche werden mit je 500 g Komposterde durchgeführt, die stark mit Wurzelgallennematoden infiziert ist. Die Behandlung erfolgt mit der wässrigen Wirkstoffaufbereitung durch Angiessen mit 20 ml der Aufbereitung.

Nach 6 bis 8 Wochen bonitiert man die Wurzeln von Tomatenpflanzen auf Gallenbildung.

| Wirkstoff Nr. | Konzentration der Wirkstoff-aufbereitung [%] | |
|---|---|---|
| 2 | 0,01 | keine Gallenbildung |
| 7 | 0,025 | » » |
| 8 | 0,02 | » » |
| 10 | 0,025 | » » |
| 11 | 0,05 | » » |
| 13 | 0,02 | » » |
| 14 | 0,05 | » » |

**Patentansprüche für die Vertragsstaaten:** BE, CH, DE, FR, GB, IT, LU, NL, SE

1. 1,3,4-Oxadiazolylmethylthiolphosphate der Formel I

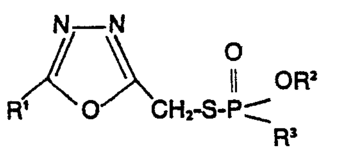

I

in der

$R^1$ und $R^2$ gleich oder verschieden sind und einen Alkylrest mit bis zu 6 Kohlenstoffatomen und

$R^3$ einen Alkylthiorest mit bis zu 6 Kohlenstoffatomen, die Aminogruppe, einen Alkyl- oder Dialkylaminorest mit jeweils bis zu 5 Kohlenstoffatomen in einem Alkylrest bedeuten.

2. O-Äthyl-S-n-propyl-S-(5-methyl-1,3,4-oxadiazolyl-2-methyl)-dithiophosphat.

3. O-Äthyl-S-i-butyl-S-(5-methyl-1,3,4-oxadiazolyl-2-methyl)-dithiophosphat.

4. O-Äthyl-S-sec.-butyl-S-(5-methyl-1,3,4-oxadiazolyl-2-methyl)-dithiophosphat.

5. Verfahren zur Herstellung von 1,3,4-Oxadiazolylmethylthiolphosphaten der Formel I gemäss Anspruch 1, dadurch gekennzeichnet, dass man 1,3,4-Oxadiazolylmethylhalogenide der Formel II

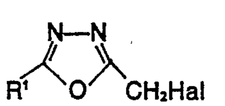

II

in der $R^1$ die im Anspruch 1 genannte Bedeutung hat und Hal für ein Halogenatom steht, mit Salzen von Thiophosphorsäurederivaten der Formel III

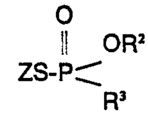

III

in der $R^2$ und $R^3$ die in Anspruch 1 genannten Bedeutungen haben und Z ein Alkaliion, ein Äquivalent Erdalkaliion oder ein gegebenenfalls durch Alkylreste substituiertes Ammoniumion bedeuten, gegebenenfalls in Anwesenheit eines Verdünnungs- oder Lösungsmittels bei Temperaturen zwischen 0 bis 150°C umsetzt.

6. Schädlingsbekämpfungsmittel, enthaltend ein 1,3,4-Oxadiazolylmethylthiolphosphat der Formel I gemäss Anspruch 1.

7. Verfahren zur Bekämpfung von Schädlingen, dadurch gekennzeichnet, dass man eine insektizid, akarizid oder hematizid wirksame Menge eines 1,3,4-Oxadiazolylmethylthiolphosphats der Formel I gemäss Anspruch 1 auf die Schädlinge bzw. deren Lebensräume einwirken lässt.

**Patentansprüche für den Vertragsstaat:** AT

1.Schädlingsbekämpfungsmittel, enthaltend ein 1,3,4-Oxadiazolylmethylthiolphosphat der Formel I

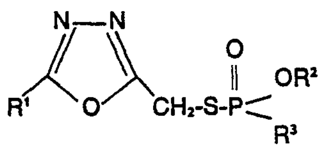

I

in der

$R^1$ und $R^2$ gleich oder verschieden sind und einen Alkylrest mit bis zu 6 Kohlenstoffatomen und

$R^3$ einen Alkylthiorest mit bis zu 6 Kohlenstoffatomen, die Aminogruppe, einen Alkyl- oder Dialkylaminorest mit jeweils bis zu 5 Kohlenstoffatomen in einem Alkylrest bedeuten,

2. Schädlingsbekämpfungsmittel, enthaltend O-Äthyl-S-n-propyl-S-(5-methyl-1,3,4-oxadiazolyl-2-methyl)-di-thiophosphat.

3. Schädlingsbekämpfungsmittel, enthaltend O-Äthyl-S-i-butyl-S-(5-methyl-1,3,4-oxadiazolyl-2-methyl)-dithiophosphat.

4. Schädlingsbekämpfungsmittel, enthaltend O-Äthyl-S-sec.-butyl-S-(5-methyl-1,3,4-oxadiazolyl-2-methyl)-dithiophosphat.

5. Verfahren zur Herstellung von 1,3,4-Oxadiazolylmethylthiolphosphaten der Formel I gemäss Anspruch 1, dadurch gekennzeichnet, dass man 1,3,4-Oxadiazolylmethylhalogenide der Formel II

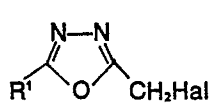

II

in der $R^1$ die im Anspruch 1 genannte Bedeutung hat und Hal für ein Halogenatom steht, mit Salzen von Thiophosphorsäurederivaten der Formel III

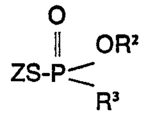

III

in der $R^2$ und $R^3$ die im Anspruch 1 genannten Bedeutungen haben und Z ein Alkaliion, ein Äquivalent Erdalkaliion oder ein gegebenenfalls durch Alkylreste substituiertes Ammoniumion bedeuten, gegebenenfalls in Anwesenheit eines Verdünnungs- oder Lösungsmittels bei Temperaturen zwischen 0 bis 150°C umsetzt.

**Claims for the Contracting states:**
BE, CH, DE, FR, GB, IT, LU, NL, SE

1. A 1,3,4-oxadiazolylmethylthiol phosphate of the formula I

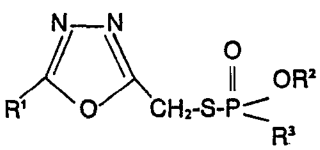

I

where $R^1$ and $R^2$ are identical or different and each denotes alkyl of up to 6 carbon atoms and $R^3$ denotes alkylthio of up to 6 carbon atoms, amino, or alkylamino or dialkylamino where alkyl is of up to 5 carbon atoms.

2. O-Ethyl-S-n-propyl-S-(5-methyl-1,3,4-oxadiazolyl-2-methyl)-dithiophosphate.

3. O-Ethyl-S-isobutyl-S-(5-methyl-1,3,4-oxadiazolyl-2-methyl)-dithiophosphate.

4. O-Ethyl-S-sec-butyl-S-(5-methyl-1,3,4-oxadiazolyl-2-methyl)-dithiophosphate.

5. A process for the manufacture of a 1,3,4-oxadiazolylmethylthiol phosphate of the formula I as claimed in claim 1, characterized in that a 1,3,4-oxadiazolylmethyl halide of the formula II

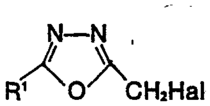

II

where $R^1$ has the meanings given in claim 1 and Hal denotes halogen, is reacted, at from 0° to 150°C and in the presence or absence of a diluent or solvent, with a salt of a thiophosphoric acid derivative of the formula III

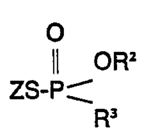

III

where $R^2$ and $R^3$ have the meanings given in claim 1 and Z denotes an alkali metal ion, one equivalent of an alkaline earth metal ion or an unsubstituted or alkyl-substituted ammonium ion.

6. A pesticide containing a 1,3,4-oxadiazolylmethylthiol phosphate of the formula I as claimed in claim 1.

7. A process for combating pests, characterized in that an insecticidally, acaricidally or nematicidally effective amount of a 1,3,4-oxadiazolylmethylthiol phosphate of the formula I as claimed in claim 1 is allowed to act on the pests or their habitat.

**Claims for the Contracting state:** AT

1. A pesticide containing a 1,3,4-oxadiazolylmethylthiol phosphate of the formula I

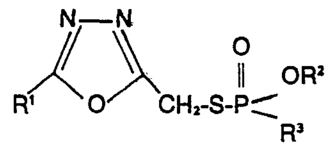

I

where $R^1$ and $R^2$ are identical or different and each denotes alkyl of up to 6 carbon atoms and $R^3$ denotes alkylthio of up to 6 carbon atoms, amino, or alkylamino or dialkylamino where alkyl is of up to 5 carbon atoms.

2. A pesticide containing O-ethyl-S-n-propyl-S-(5-methyl-1,3,4-oxadiazolyl-2-methyl)-dithiophosphate.

3. A pesticide containing O-ethyl-S-isobutyl-S-(5-methyl-1,3,4-oxadiazolyl-2-methyl)-dithiophosphate.

4. A pesticide containing O-ethyl-S-sec-butyl-S-(5-methyl-1,3,4-oxadiazolyl-2-methyl)-dithiophosphate.

5. A process for the manufacture of a 1,3,4-oxadiazolylmethylthiol phosphate of the formula I as claimed in claim 1, characterized in that a 1,3,4-oxadiazolylmethyl halide of the formula II

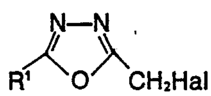

II

where $R^1$ has the meanings given in claim 1 and Hal denotes halogen, is reacted, at from 0° to 150°C and in the presence or absence of a diluent or solvent, with a salt of a thiophosphoric acid derivative of the formula III

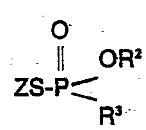

III

where $R^2$ and $R^3$ have the meanings given in claim 1 and Z denotes an alkali metal ion, one equivalent of an alkaline earth metal ion or an unsubstituted or alkyl-substituted ammonium ion.

**Revendications pour les Etats contractants:**
BE, CH, DE, FR, GB, IT, LU, NL, SE

1. 1,3,4-oxadiazolylméthylthiolphosphates de formule I

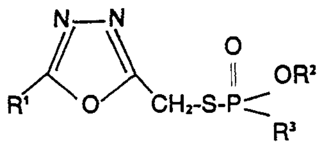

I

dans laquelle
$R^1$ et $R^2$ sont identiques ou différents et représentent un reste alkyle ayant jusqu'à 6 atomes de carbone et $R^3$ un reste alkylthio ayant jusqu'à 6 atomes de carbone, le groupe amino, un reste alkyl- ou dialkylamino, ayant chacun jusqu'à 5 atomes de carbone dans un reste alkyle.

2. O-éthyl-S-n-propyl-S-(5-méthyl-1,3,4-oxadiazolyl-2-méthyl)-dithiophosphate.

3. O-éthyl-S-i-butyl-S-(5-méthyl-1,3,4-oxadiazolyl-2-méthyl)-dithiophosphate.

4. O-éthyl-S-sec.-butyl-S-(5-méthyl-1,3,4-oxadiazolyl-2-méthyl)-dithiophosphate.

5. Procédé de préparation de 1,3,4-oxadiazolylméthylthiolphosphates de formule I selon la revendication 1, caractérisé par le fait que l'on fait réagir, à des températures comprises entre 0 et 150°C, éventuellement en présence d'un diluant ou solvant, des halogénures de 1,3,4-oxadiazolylméthyle de formule II

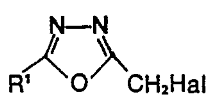

II

dans laquelle $R^1$ a la signification donnée à la revendication 1 et Hal représente un atome d'halogène, avec des sels de dérivés d'acide thiophosphorique de formule III

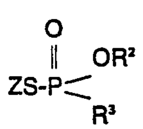

III

dans laquelle $R^2$ et $R^3$ ont les significations données à la revendication 1 et Z représente un ion alcalin, un équivalent d'un ion alcalino-terreux ou un ion ammonium éventuellement substitué par un reste alkyle.

6. Agent de lutte contre les parasites contenant des 1,3,4-oxadiazolylméthylthiolphosphates de formule I selon la revendication 1.

7. Procédé de lutte contre les parasites, caractérisé par le fait qu'on fait agir une quantité efficace, du point de vue insecticide, acaricide ou nématocide, d'un 1,3,4-oxadiazolylméthylthiolphosphate de formule I selon la revendication 1 sur les parasites ou leur biotope.

**Revendications pour l'Etat contractant:** AT

1. Agent de lutte contre les parasites, contenant un 1,3,4-oxadiazolylméthylthiolphosphate de formule I

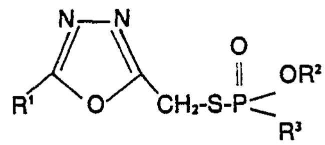

I

dans laquelle
$R^1$ et $R^2$ sont identiques ou différents et représentent un reste alkyle ayant jusqu'à 6 atomes de carbone et $R^3$ un reste alkylthio ayant jusqu'à 6 atomes de carbone, le groupe amino, un reste alkyl- ou dialkylamino, ayant chacun jusqu'à 5 atomes de carbone dans un reste alkyle.

2. Agent de lutte contre les parasites contenant de l'O-éthyl-S-n-propyl-S-(5-méthyl-1,3,4-oxadiazolyl-2-méthyl)-dithiophosphate.

3. Agent de lutte contre les parasites contenant de l'O-éthyl-S-i-butyl-S-(5-méthyl-1,3,4-oxadiazolyl-2-méthyl)-dithiophosphate.

4. Agent de lutte contre les parasites contenant de l'O-éthyl-S-sec.-butyl-S-(5-méthyl-1,3,4-oxadiazolyl-2-méthyl)-dithiophosphate.

5. Procédé de préparation de 1,3,4-oxadiazolylméthylthiolphosphates de formule I selon la revendication 1, caractérisé par le fait que l'on fait réagir, à des températures comprises entre 0 et 150°C, éventuellement en présence d'un diluant ou solvant, des halogénures de 1,3,4-oxadiazolylméthyle de formule II

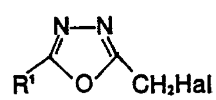

II

dans laquelle $R^1$ a la signification donnée à la revendication 1 et Hal représente un atome d'halogène, avec des sels de dérivés d'acide thiophosphorique de formule III

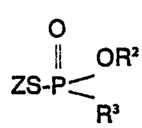

III

dans laquelle $R^2$ et $R^3$ ont les significations données à la revendication 1 et Z représente un ion alcalin, un équivalent d'un ion alcalino-terreux ou un ion ammonium éventuellement substitué par un reste alkyle.